# FASCICULE DE BREVET EUROPEEN

(11) **EP 2 616 291 B1**
(45) Date de publication et mention de la délivrance du brevet: **20.08.2014**
(21) Numéro de dépôt: 11773076.2
(22) Date de dépôt: 14.09.2011
(51) Int. Cl.: B60S 5/06, B60K 1/04, B60R 16/04, B60L 11/18, H01M 2/10

(54) **STRUCTURE DE VEHICULE AUTOMOBILE A BATTERIE D'ACCUMULATEURS AMOVIBLE**
KRAFTFAHRZEUGSTRUKTUR MIT ENTFERNBAREM AKKUMULATOR
MOTOR VEHICLE STRUCTURE WITH REMOVABLE ACCUMULATOR BATTERY

(30) Priorité: 14.09.2010 FR 1057323
(43) Date de publication de la demande: 24.07.2013
(73) Titulaire: Renault S.A.S., 92100 Boulogne-Billancourt (FR)
(72) Inventeur: MULATO, Gilles, F-92320 Chatillon (FR); MOSNIER, François, F-78160 Marly-le-roi (FR); BROISIN-DOUTAZ, Marc, F-78280 Guyancourt (FR); SEMANAZ, Michel, F-78460 Chevreuse (FR); SALOMONS, Jean-Luc, F-95110 Sannois (FR)
(86) Numéro de dépôt international: PCT/FR2011/052092
(87) Numéro de publication internationale: WO 2012/035254

(56) Documents cités:
- US-A1- 2010 071 979

## Description

La présente invention concerne une structure de véhicule automobile à propulsion électrique permettant d'accueillir une batterie d'accumulateurs amovible destinée à alimenter le véhicule en énergie électrique. Elle concerne également une batterie d'accumulateurs adaptée à ladite structure.

Il existe de nombreux véhicules automobiles à propulsion électrique. Ils comprennent un moteur électrique et une batterie d'accumulateurs rechargeable alimentant ce moteur électrique. L'inconvénient de ces véhicules réside dans leur autonomie relativement modeste par rapport aux véhicules à moteur thermique et dans la durée relativement longue nécessaire au rechargement les batteries d'accumulateurs.

Une structure comprenant toutes les caractéristiques du préambule de la revendication 1 est connue du document US 2010/71979 A1.

Aussi, il a été imaginé de réaliser des batteries d'accumulateurs amovibles de manière à pouvoir substituer la batterie d'accumulateurs chargée à la batterie épuisée d'un véhicule automobile en s'affranchissant des quelques heures nécessaires au rechargement. On pourra notamment se référer au document US 5 301 765 portant sur un véhicule à propulsion électrique incluant une batterie d'accumulateurs amovible, lequel décrit un dispositif particulier relativement complexe pour inter-changer les batteries d'accumulateurs.

Un inconvénient de ce dispositif, bien qu'il permette de substituer une batterie d'accumulateurs dans un temps relativement court en comparaison du temps de rechargement, est néanmoins relativement long à mettre en oeuvre en comparaison de la durée de remplissage d'un réservoir à carburant d'un véhicule à moteur thermique.

Au surplus, les batteries d'accumulateurs étant relativement volumineuses et lourdes, elles sont entraînées en mouvement oscillatoire par les vibrations du véhicule lui-même.

Aussi, un problème qui se pose et que vise à résoudre la présente invention est de fournir une structure de véhicule automobile qui puisse, notamment, dissiper les oscillations de la batterie d'accumulateurs installée à l'intérieur du véhicule lorsque ce dernier est dans une situation normale de fonctionnement.

Dans ce but, et selon un premier objet, la présente invention propose une structure de véhicule automobile à propulsion électrique, ladite structure comprenant un logement destiné à recevoir une batterie d'accumulateurs amovible pour alimenter ledit véhicule en courant électrique, ladite structure présentant une portion inférieure de structure et une portion supérieure de structure opposée à ladite portion inférieure de structure, ladite batterie d'accumulateurs présentant une partie inférieure de batterie et une partie supérieure de batterie surmontant ladite partie inférieure de batterie, ladite structure présentant des organes de réception situés dans ladite portion inférieure de structure et des organes de liaison situés dans ladite portion supérieure de structure, lesdits organes de réception étant aptes à recevoir ladite partie inférieure de batterie tandis que lesdits organes de liaison sont aptes à relier ladite partie supérieure de batterie à ladite portion supérieure de structure lorsque ladite batterie d'accumulateurs est engagée à l'intérieur dudit logement, ladite batterie d'accumulateurs étant susceptible d'osciller à l'intérieur dudit logement par rapport à ladite structure ; selon l'invention, lesdits organes de liaison comprennent un ensemble élastiquement déformable pour amortir les oscillations de ladite partie supérieure de batterie par rapport à ladite portion supérieure de structure.

Ainsi, une caractéristique de l'invention réside dans la mise en oeuvre d'un ensemble élastiquement déformable au sein desdits organes de liaison pour absorber à tout le moins une partie de l'énergie de la partie supérieure de batterie lorsqu'elle oscille. En effet, la batterie d'accumulateurs s'étend verticalement et elle est maintenue en position fixe au niveau de sa partie inférieure de batterie, de sorte que sa partie supérieure tend à osciller dans un plan sensiblement horizontal, lorsque le véhicule est en fonctionnement. L'ensemble élastiquement déformable a pour rôle d'absorber ces oscillations.

Selon un mode de mise en oeuvre de l'invention particulièrement avantageux, ledit logement débouche à l'extérieur de ladite structure à travers ladite portion inférieure de structure, ladite batterie d'accumulateurs étant apte à être engagée à l'intérieur dudit logement à travers ladite portion inférieure de structure. Le logement apte à recevoir la batterie d'accumulateurs s'étend sensiblement verticalement à l'intérieur de ladite structure qui elle-même s'étend de la partie basse du véhicule vers sa partie haute. Aussi, la portion inférieure de structure est située dans la partie basse du véhicule, tandis que la portion supérieure de structure est située dans ladite partie haute. Ladite structure est par exemple située vers l'arrière du véhicule et le logement débouche à travers la portion inférieure de structure, laquelle constitue une partie de plancher du véhicule automobile. Par conséquent, la batterie d'accumulateurs est apte à être introduite par-dessous le véhicule et à être entraîné verticalement à l'intérieur du logement en traversant la portion inférieure de structure. En bout de course de la batterie d'accumulateurs à l'intérieur du logement, les organes de liaison viennent relier la partie supérieure de batterie, tandis que la partie inférieure de batterie vient en prise dans les organes de réception pour y être solidarisée. Ainsi, la batterie d'accumulateurs est susceptible d'être inter-changée rapidement à l'aide d'une installation adaptée. Il suffit en effet d'évacuer verticalement à travers la portion inférieure de structure la batterie d'accumulateurs épuisée. Son propre poids peut contribuer à faciliter cette évacuation. Ensuite, une batterie d'accumulateurs chargée est alors engagée verticalement dans le logement à travers la portion inférieure de structure.

Selon l'invention avantageux, ladite batterie d'accumulateurs comprend un doigt de liaison qui s'étend longitudinalement en saillie de ladite partie supérieure de batterie, ledit doigt de liaison étant destiné à être engagé à travers ledit ensemble élastiquement déformable. De la sorte, lorsque la batterie d'accumulateurs est engagée dans le logement à travers la portion inférieure de structure et qu'elle est en bout de course, le doigt de liaison vient coopérer avec les organes de liaison pour traverser l'ensemble élastiquement déformable et être ainsi solidaire de la portion supérieure de structure. Avantageusement, ledit doigt de liaison présente une extrémité libre de contact orientée à l'opposé de ladite partie inférieure de batterie. Cette extrémité libre de contact va précisément venir d'abord en contact avec l'ensemble élastiquement déformable pour s'y engager ensuite lorsque la batterie d'accumulateurs est entraînée en mouvement pour être entièrement logée à l'intérieur du logement. Préférentiellement, ledit doigt de liaison est destiné à être entraîné en translation selon sa direction longitudinale à travers ledit ensemble élastiquement déformable, lorsque ladite batterie d'accumulateurs est engagée à l'intérieur dudit logement. De la sorte, le doigt de liaison qui est de symétrie cylindrique, est entraîné en mouvement à l'intérieur d'une enveloppe cylindrique qu'il définit, jusqu'à sa position terminale dans laquelle la batterie d'accumulateurs est entièrement logée à l'intérieur du logement. Ainsi, les oscillations de la partie supérieure de batterie sont reprises par l'ensemble élastiquement déformable par l'intermédiaire du doigt de liaison qui s'étend perpendiculairement aux parties de l'ensemble élastiquement déformable contre lesquelles le doigt de liaison est en contact.

Par ailleurs, la structure de véhicule automobile comprend des moyens d'auto-centrage pour centrer ledit ensemble élastiquement déformable autour dudit doigt de liaison lorsque ledit doigt de liaison est entraîné à travers ledit ensemble élastiquement déformable. Ainsi, lorsque le doigt de liaison est entraîné en mouvement de translation à l'intérieur de l'enveloppe cylindrique théorique qu'il définit, et dès qu'il entre en contact avec l'ensemble élastiquement déformable, ce dernier est lui-même entraîné en mouvement de translation, sensiblement perpendiculaire au doigt de liaison, de manière à venir s'ajuster précisément autour de lui, tandis qu'il est entraîné vers sa position terminale. De la sorte, lorsque la batterie est inter-changée, et que la course de la batterie de substitution à l'intérieur du logement est sensiblement différente de celle de la batterie substituée, et que le doigt de liaison vient alors s'ajuster dans une position latérale sensiblement différente également par rapport audit ensemble élastiquement déformable, ce dernier vient se centrer sur le doigt de liaison.

Précisément, et selon une première variante de réalisation de l'invention, ledit ensemble élastiquement déformable comporte une bague en élastomère et une bague rigide montée de manière concentrique à l'intérieur de ladite bague en élastomère, ladite bague rigide présentant une ouverture tronconique orientée vers ladite portion inférieure de structure. Ainsi, la bague rigide qui s'étend sensiblement selon un plan horizontal, est alors orientée sensiblement perpendiculairement au doigt de liaison lorsque la batterie d'accumulateurs est engagée à l'intérieur du logement. L'ouverture tronconique étant orientée vers la portion inférieure de structure, lorsque la batterie d'accumulateurs est entraînée en translation à l'intérieur du logement et que le doigt de liaison vient à l'approche de l'ensemble élastiquement déformable, il vient s'engager, dans un cas idéal coaxialement à l'intérieur de la bague rigide dont l'alésage correspond au diamètre du doigt de liaison au jeu fonctionnel près. Toutefois, dans la majorité des cas d'engagement d'une batterie d'accumulateurs à l'intérieur du logement, le doigt de liaison vient en butée dans la partie tronconique de la bague rigide, qui forme alors rampe, de sorte que la poursuite du mouvement de translation du doigt de liaison provoque un mouvement perpendiculaire à celui-ci de la bague rigide qui alors, à son tour provoque la déformation élastique de la bague en élastomère qui l'inclut. En fin de course, le doigt de liaison vient finalement s'ajuster dans l'alésage de la bague rigide. En outre, malgré la précontrainte de la bague en élastomère dû à l'auto-centrage de l'ensemble élastiquement déformable, cette bague en élastomère conserve ses propriétés d'amortissement des mouvements d'oscillations de la batterie d'accumulateurs.

Selon une deuxième variante de réalisation de l'invention, ledit ensemble élastiquement déformable comporte un disque en élastomère présentant un orifice central et des fentes radiales ménagées à partir dudit orifice central. Tout comme l'alésage précité de la bague rigide, l'orifice central du disque en élastomère présente une dimension égale, au jeu fonctionnel près, au diamètre du doigt de liaison. En outre, les fentes radiales, par exemple au nombre de huit, forment des secteurs élastiquement déformables indépendamment les uns des autres. Lorsque le doigt de liaison est engagé coaxialement à l'orifice central, le disque en élastomère ne subit aucune déformation. En revanche, lorsque l'approche du doigt de liaison n'est pas coaxiale à l'orifice central, certains des secteurs précités sont entraînés en mouvement pour venir s'ajuster autour du doigt de liaison. On expliquera plus en détail par la suite de la description comment les secteurs se déplacent.

Selon une troisième variante de réalisation, ledit ensemble élastiquement déformable comporte un corps en élastomère présentant une pluralité de fentes sensiblement parallèles espacées les unes des autres. Les fentes sont régulièrement espacées les unes des autres de manière à former des lèvres elles-mêmes régulièrement espacées les unes des autres. Ces lèvres sont chanfreinées de manière à faciliter l'auto-centrage lorsque le doigt de liaison est engagé à travers. Au surplus, les fentes présentent une largeur inférieure au diamètre du doigt de liaison, de sorte que lorsque celui-ci est introduit entre deux lèvres, ces dernières s'écartent pour autoriser son engagement. La pluralité de fentes permet d'obtenir une pluralité de lèvres, de sorte que, quelle que soit la position latérale du doigt de liaison lorsqu'il arrive à l'approche de l'ensemble élastiquement déformable, il existe nécessairement une paire de lèvre apte à l'accueillir dans son prolongement. On expliquera bien évidemment plus en détail dans la suite de la description cette troisième variante de réalisation.

En outre, et selon un second objet, la présente invention propose une batterie d'accumulateurs amovible pour structure de véhicule automobile telle que décrite ci-dessus, ladite batterie d'accumulateurs présentant une partie inférieure de batterie et une partie supérieure de batterie surmontant ladite partie inférieure de batterie ; et selon l'invention, elle comprend en outre un doigt de liaison qui s'étend longitudinalement en saillie de ladite partie supérieure de batterie, ledit doigt de liaison présentant une extrémité libre de contact orientée à l'opposé de ladite partie inférieure de batterie.

D'autres particularités et avantages de l'invention ressortiront à la lecture de la description faite ci-après de modes de réalisation particuliers de l'invention, donnés à titre indicatif mais non limitatif, en référence aux dessins annexés sur lesquels :
- la Figure 1 est une vue schématique en élévation de côté d'un véhicule automobile incluant une structure et une batterie d'accumulateurs selon l'invention, dans une première position relative ;
- la Figure 2 est une vue schématique en élévation de côté du véhicule automobile incluant la structure et la batterie d'accumulateurs selon la Figure 1, dans une seconde position relative ;
- la Figure 3 est une vue schématique de détail en coupe axiale des éléments de structure et de batterie d'accumulateurs tels que représentés sur la Figure 2, selon une première variante de réalisation et dans une première phase de mouvement ;
- la Figure 4 est une vue schématique des éléments tels que représentés sur la Figure 3, dans une seconde phase de mouvement ;
- la Figure 5 est une vue schématique de détail en coupe axiale des éléments de structure et de batterie d'accumulateurs tels que représentés sur la Figure 2, selon une deuxième variante de réalisation et dans une phase de mouvement correspondant à la seconde phase de mouvement selon la première variante ;
- la Figure 6 est une vue schématique de dessous selon le plan VI-VI illustré sur la Figure 5 des éléments tels que représentés sur la Figure 5 ;
- les Figures 7A et 7B sont respectivement des vues schématiques de dessus et en coupe droite d'un détail des éléments de structure tels que représentés sur la Figure 2, selon une troisième variante de réalisation ; et,
- les Figures 8A et 8B sont respectivement des vues schématiques de détail en coupe axiale des éléments de structure et de batterie d'accumulateurs tels que représentés sur la Figure 2, selon la troisième variante de réalisation et dans les première et seconde phases de mouvement correspondant à celle de la première variante de réalisation.

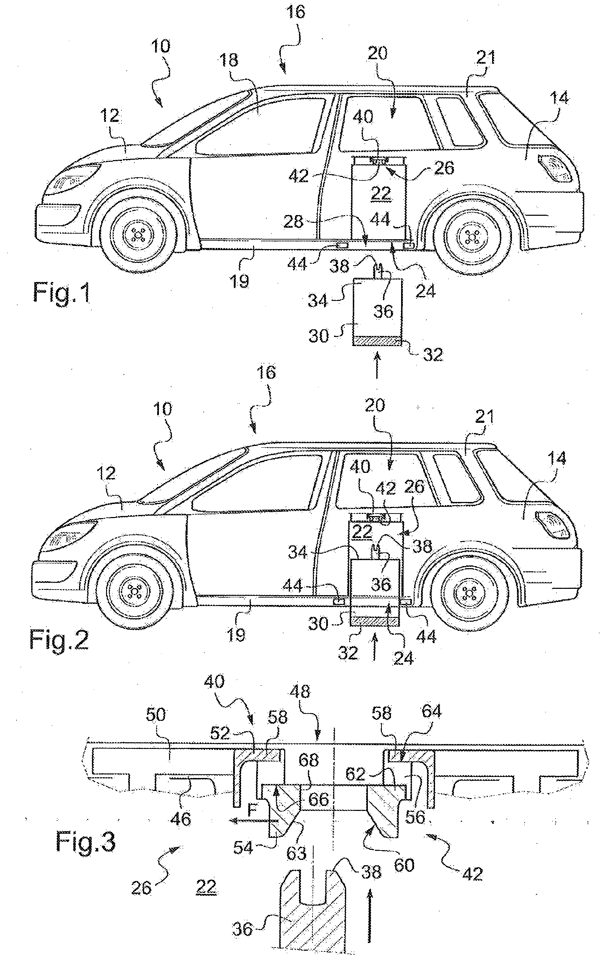

La Figure 1 illustre un véhicule automobile à propulsion électrique 10 comprenant une partie avant 12 apte à recevoir un moteur électrique, une partie arrière 14 formant coffre et entre les deux, une partie médiane 16 présentant un espace conducteur 18 situé vers la partie avant 12 et une structure 20 conforme à l'invention située elle, entre l'espace conducteur 18 et la partie arrière 14. Cette structure 20 est représentée à titre illustratif sur la Figure 1, près de l'espace conducteur 18. Elle pourrait également être située vers la partie arrière 14, sous la partie coffre du véhicule.

En outre, le véhicule automobile 10 présente un châssis 19 sur lequel est installée une carrosserie 21. La structure 20 comprend un logement 22 et elle présente d'une part une portion inférieure de structure 24 située au niveau du châssis 19, et d'autre part une portion supérieure de structure 26 opposée verticalement à la portion inférieure de structure 24. Le logement 22 s'étend ainsi verticalement entre les portions inférieure et supérieure de structure 24, 26 et au surplus, il présente une ouverture 28 qui débouche à l'extérieur de la structure 20 à travers la portion inférieure de structure 24 et le châssis 19. En outre, il est préférentiellement parallélépipédique rectangle.

Par ailleurs, la Figure 1 montre également une batterie d'accumulateurs amovible 30, laquelle présente une partie inférieure 32 formant embase et à l'opposé une partie supérieure 34. Elle est d'une forme parallélépipédique rectangle et de dimensions identiques à celles du logement 22, au jeu fonctionnel près, de manière à pouvoir y être guidée en translation verticalement, ainsi que l'illustre la Figure 2. On retrouve sur cette dernière Figure l'ensemble des éléments décrits en référence à la Figure 1. En outre, elle comprend un doigt de liaison 36, qui s'étend en saillie de la partie supérieure de batterie 34 et dans un sens opposé à la partie inférieure 32. Le doigt de liaison 36 est de symétrie cylindrique de révolution, et il présente une extrémité libre de contact 38 chanfreinée.

De plus, la structure 20 présente des organes de liaison 40 incluant un ensemble élastiquement déformable 42 que l'on décrira ci-après selon différentes variantes de réalisation, et à travers lequel vient s'engager le doigt de liaison 36 lorsque la batterie d'accumulateurs 30 s'étend entièrement à l'intérieur du logement 22. En outre, la structure 20 présente des organes de réception 44 permettant de venir maintenir en position fixe la partie inférieure de batterie 32 par rapport à la structure 20. Pour ce faire, les organes de réception 44 présentent des éléments mobiles en translation venant en prise dans la partie inférieure de batterie 32. Ainsi, la batterie d'accumulateurs 30 est maintenue en position fixe à l'intérieur du logement 22, tandis que le doigt de liaison 36 est lui maintenu engagé à travers l'ensemble élastiquement déformable 42.

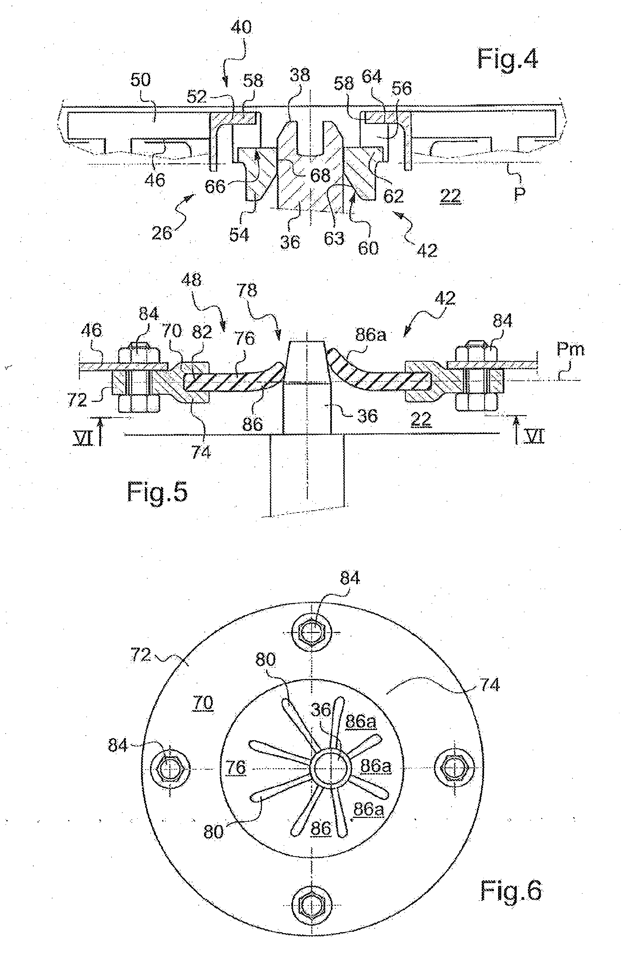

On se reportera aux Figures 3 et 4 illustrant une première variante de réalisation des organes de liaison 40. On retrouve sur la Figure 3, le doigt de liaison 36 de symétrie axiale, présentant son extrémité libre de contact 38 chanfreinée. En outre, on y retrouve également l'ensemble élastiquement déformable 42 selon cette première variante de réalisation.

La portion supérieure de structure 26 présente une paroi d'appui 46 à travers laquelle est ménagée une ouverture circulaire 48. Les organes de liaison 40 comprennent également une platine de fixation 50 montée en appui sur la paroi d'appui 46 à l'opposé du logement 22. La platine de fixation 50 supporte l'ensemble élastiquement déformable qui est installé coaxialement à travers l'ouverture circulaire 48. Ce dernier comprend une couronne cylindrique 52 encastrée dans la platine de fixation 50 et une bague rigide 54 maintenue coaxialement sur la couronne cylindrique 52 par l'intermédiaire d'une bague en élastomère 56. La couronne cylindrique 52 présente un retour 58 formant une bordure circulaire interne dans le plan défini par la platine de fixation 50 et la bague rigide 54 présente une ouverture tronconique 60 orientée vers le logement 22 et à l'opposé, un bord circulaire de fixation 62. La bague en élastomère 56 présente alors d'une part, un flanc supérieur 64 dans lequel est encastrée la bordure circulaire interne du retour 58 et d'autre part, un flanc inférieur 66 dans lequel est encastré le bord circulaire de fixation 62 de la bague rigide 54. En outre, la bague rigide 54, dont l'ouverture tronconique 60 définit des portées tronconiques d'appui 63, définit également un alésage circulaire 68 dont le diamètre correspond au diamètre du doigt de liaison 36 au jeu fonctionnel près. La bague rigide 54 et son alésage circulaire 68 définissent ainsi un chemin de passage entre le logement 22 et l'extérieur du logement en traversant la paroi d'appui 46.

Tels que représentés sur la Figure 3, le doigt de liaison 36 et la bague rigide 54 ne sont pas dans une position coaxiale. Cette situation est fréquente lorsque la batterie d'accumulateurs 30 est entraînée à l'intérieur du logement 22 et que le doigt de liaison 36 vient à l'approche de la bague rigide 54. Les batteries d'accumulateurs 30 n'ont en effet pas toutes les mêmes cotes et le doigt de liaison 36 lui-même est ajusté sur la partie supérieure de batterie avec une certaine précision qui diffère suivant les batteries d'accumulateurs 30.

Ainsi, compte tenu des positions relatives du doigt de liaison 36 et de la bague rigide 54, lorsque la batterie d'accumulateurs est entraînée verticalement plus encore à l'intérieur du logement 22, l'extrémité libre de contact 38 chanfreinée vient alors d'abord en appui contre la portée tronconique d'appui 63 qui forme alors rampe par rapport à l'extrémité libre de contact 38. Aussi, la bague 54 tend à être entraînée en mouvement latéral, selon la flèche F sur la représentation de la Figure 3, tandis que la bague en élastomère 36 se déforme parallèlement en cisaillement latéral dans le même sens pour autoriser l'engagement du doigt de liaison 36 à travers l'alésage 68 de la bague rigide 54. Aussi, la bague rigide 54 s'auto-centre autour du doigt de liaison 36.

On se reportera maintenant à la Figure 4, sur laquelle on retrouve tous les éléments illustrés sur la Figure 3, et où non seulement le doigt de liaison 36 est engagé à travers l'alésage 68, mais aussi, le doigt de liaison 36, la bague rigide 54 et la couronne cylindrique 52 sont coaxiaux. Cette situation est idéale, puisqu'elle implique que le doigt de liaison 36 et la bague rigide 54 soit déjà dans une position coaxiale lorsque la batterie d'accumulateurs est engagé à l'intérieur du logement.

Quelle que soit la situation, celle de la Figure 3 après que le doigt de liaison 36 et été engagé dans la bague rigide 54 et où la bague en élastomère 56 a subi une déformation en cisaillement et qui demeure dans cette position tant que le doigt de liaison 36 est engagé dans l'alésage 68, ou bien celle de la Figure 4 ou la bague en élastomère 56 ne présente pas de déformation en cisaillement, l'ensemble élastiquement déformables 42, et en particulier la bague en élastomère 56 est apte à amortir les oscillations ou les vibrations du doigt de liaison 36 selon une direction parallèle P à la platine de fixation 50 et perpendiculaire au doigt de liaison 36. Ces vibrations latérales du doigt de liaison 36, lui sont communiquées par la partie supérieure de batterie, non représentée sur la Figure, et dont il est solidaire.

On se reportera à présent aux Figures 5 et 6 illustrant une deuxième variante de réalisation des organes de liaison 40. Par rapport aux Figures 3 et 4, on retrouve sur la Figure 5, le doigt de liaison 36 engagé à travers l'élément élastiquement déformable 42, dans l'une position de fonctionnement analogue à celle qui est illustrée sur la Figure 4. On retrouve également l'ouverture circulaire 48 de la paroi d'appui 46 dont sont solidaires les organes de liaison et l'ensemble élastiquement déformable 42. Il comprend une couronne plate 70 présentant une bordure extérieure de fixation 72 et à l'opposé une bordure intérieure de maintien 74. Il comprend également un disque en élastomère 76 présentant d'une part, un orifice central 78 et huit fentes radiales équidistantes 80 illustrées sur la Figure 6, et qui rejoignent l'orifice central 78, et d'autre part une bordure externe 82 sertie dans l'épaisseur de la bordure intérieure de maintien 74 de la couronne plate 70. Cette dernière est installée contre la paroi d'appui 46 vers l'intérieur du logement 22 et elle y est maintenue en position fixe, la bordure extérieure de fixation 72 à plat contre la bordure interne de l'ouverture circulaire 48, au moyen de systèmes vis écrou 84.

Grâce aux fentes radiales 80 ménagées à partir de l'orifice central 78 dans le disque en élastomère 76, on obtient des secteurs 86 élastiquement déformables perpendiculairement au plan moyen Pm défini par la couronne plate 70. Les secteurs 86 sont en effet aptes à pivoter chacun autour d'une corde plus ou moins rapprochée de la bordure externe 82 du disque en élastomère 76 et partant, plus ou moins éloignée de l'orifice central 78, en fonction de la position relative du doigt de liaison 36 et de l'axe de l'orifice central 78 du disque en élastomère 76. Ainsi, tels qu'illustrés sur les Figures 5 et 6, le doigt de liaison 36 et l'orifice central 78, ne sont pas initialement coaxiaux, le doigt de liaison 36 étant légèrement déporté vers la droite sur les Figures par rapport à l'élément élastiquement déformable 42. Et lorsque le doigt de liaison 36 est engagé à travers le disque en élastomère 76, trois secteurs 86a, les plus à droite sur la Figure, subissent une déformation élastique plus importante que les autres. En revanche, tous les secteurs 86 viennent en appui contre le doigt de liaison 36. Par conséquent, tout comme la précédente variante, l'ensemble élastiquement déformable permet à la fois, une dispersion dans sa position relative vis-à-vis du doigt de liaison 36 et une dissipation des vibrations de ce dernier. Au surplus, il permet un maintien de la partie supérieure de batterie. Et enfin, grâce à sa constitution particulière, les efforts latéraux qui s'exercent sur le doigt de liaison 36 lors de l'introduction à travers l'ensemble élastiquement déformable 42 sont relativement ténus.

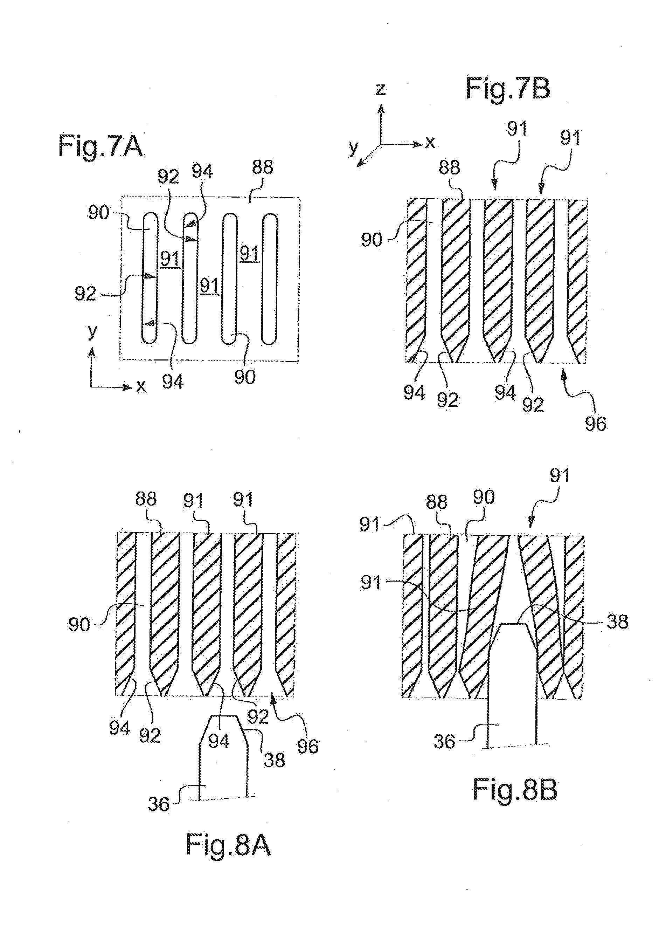

Selon une troisième variante de réalisation des organes de liaison, tels que représentés sur les Figures 7A, 7B, avec le seul ensemble élastiquement déformable et sur les Figures 8A, 8B avec l'ensemble élastiquement déformable et le doigt de liaison 36, on forme l'ensemble élastiquement déformable à partir d'un corps en élastomère 88 formant bloc dans lequel on ménage des fentes parallèles traversantes 90 espacées les unes des autres. Ces fentes 90 définissent alors des cloisons 91 et des paires de lèvres 92, 94

Le corps en élastomère 88 formant l'ensemble élastiquement déformable est ajusté dans la portion supérieure de structure 26 du véhicule automobile 10 de sorte que les fentes soient orientées transversalement selon l'axe Y du véhicule automobile et partant, perpendiculairement à l'axe longitudinal X du véhicule automobile. Il est représenté de dessus sur la Figure 7A, les fentes traversantes sont régulièrement espacées les unes des autres d'une distance correspondant sensiblement au diamètre du doigt de liaison 36 que l'on retrouve sur les Figures 8A et 8B. Le corps en élastomère 88 est destiné à être installé à travers l'ouverture circulaire 48 de la paroi d'appui 46 illustrée par exemple sur la Figure 5, avec des moyens adaptés non représentés ici. En outre, selon une coupe perpendiculaire aux fentes parallèles traversantes 90 du corps en élastomère 88, telle qu'illustrée sur la Figure 7B, on observera que les lèvres 92, 94 sont chanfreinées dans la partie inférieure 96 du corps en élastomère 88. Le corps en élastomère 88 est alors ajusté à travers l'ouverture circulaire 48, de façon que la partie inférieure 96 soit orientée vers le logement 22 tandis que les fentes 90 sont perpendiculaires à la direction longitudinale du véhicule automobile. De la sorte, les lèvres 92, 94 chanfreinées permettent de faciliter l'engagement du doigt de liaison 86 que l'on retrouve sur la Figure 8A, à travers les fentes 90. En effet, la surface ouverte de la partie inférieure 96 du corps en élastomère 88 est plus importante. Et lorsque le doigt de liaison 36 est entraîné en translation vers le corps en élastomère 88, les lèvres 92, 94 s'écartent plus aisément dès que l'extrémité libre de contact 38 vient en appui contre les chanfreins des lèvres 92, 94 qui forment alors rampe vis-à-vis de cette extrémité 38. Lorsque le mouvement du doigt de liaison 36 se poursuit en translation à l'intérieur du corps en élastomère 88, les cloisons 91 en contact avec le doigt de liaison 36 s'écartent latéralement pour autoriser son introduction. Là encore, grâce à la pluralité de fentes 90 espacées les unes des autres, une dispersion de positionnement de la batterie d'accumulateurs à l'intérieur du logement est possible, puisque le doigt de liaison 36 peut s'engager dans l'une quelconque de ces fentes. Au surplus, une fois engagé à l'intérieur du corps en élastomère 88, le doigt de liaison 36 y est maintenu en position fixe ce qui permet une tenue de la batterie d'accumulateurs. En outre, les vibrations du doigt de liaison 36 sont absorbées par le corps en élastomère 88. Et enfin, les efforts d'introduction du doigt de liaison 36 à l'intérieur du corps en élastomère 88 sont relativement ténus.

Les trois variantes de réalisation de l'invention décrites ci-dessus permettent en outre, d'inter-changer la batterie d'accumulateurs mobile de manière automatique et rapide.

## Revendications

1. Structure (20) de véhicule automobile à propulsion électrique (10), ladite structure comprenant un logement (22) destiné à recevoir une batterie d'accumulateurs amovible (30) pour alimenter ledit véhicule en courant électrique, ladite structure (20) présentant une portion inférieure de structure (24) et une portion supérieure de structure (26) opposée à ladite portion inférieure de structure, ladite batterie d'accumulateurs (30) présentant une partie inférieure de batterie (32) et une partie supérieure de batterie (34) surmontant ladite partie inférieure de batterie, ladite structure (20) présentant des organes de réception (44) situés dans ladite portion inférieure de structure et des organes de liaison (40) situés dans ladite portion supérieure de structure, lesdits organes de réception (44) étant aptes à recevoir ladite partie inférieure de batterie (32) tandis que lesdits organes de liaison (40) sont aptes à relier ladite partie supérieure de batterie (34) à ladite portion supérieure de structure (26) lorsque ladite batterie d'accumulateurs (30) est engagée à l'intérieur dudit logement (22), ladite batterie d'accumulateurs étant susceptible d'osciller à l'intérieur dudit logement par rapport à ladite structure, et
lesdits organes de liaison (40) comprenant un ensemble élastiquement déformable (42) pour amortir les oscillations de ladite partie supérieure de batterie (34) par rapport à ladite portion supérieure de structure (26) **caractérisée en ce que** ladite batterie d'accumulateurs (30) comprend un doigt de liaison (36) qui s'étend longitudinalement en saillie de ladite partie supérieure de batterie (34), ledit doigt de liaison (36) étant destiné à être engagée à travers ledit ensemble élastiquement déformable (42).

2. Structure de véhicule automobile selon la revendication 1, **caractérisée en ce que** ledit logement (22) débouche à l'extérieur de ladite structure (20) à travers ladite portion inférieure de structure (24), ladite batterie d'accumulateurs (30) étant apte à être engagée à l'intérieur dudit logement (22) à travers ladite portion inférieure de structure (24).

3. Structure de véhicule automobile selon la revendication 1, **caractérisée en ce que** ledit doigt de liaison (36) présente une extrémité libre de contact (38) orientée à l'opposé de ladite partie inférieure de batterie (32).

4. Structure de véhicule automobile selon la revendication 1 ou 3, **caractérisée en ce que** ledit doigt de liaison (36) est destiné à être entraîné en translation selon sa direction longitudinale à travers ledit ensemble élastiquement déformable (42), lorsque ladite batterie d'accumulateurs (30) est engagée à l'intérieur dudit logement (22).

5. Structure de véhicule automobile selon l'une quelconque des revendications 1 à 4, **caractérisée en ce qu'**il comprend des moyens d'autocentrage pour centrer ledit ensemble élastiquement déformable (42) autour dudit doigt de liaison (36) lorsque ledit doigt de liaison est entraîné à travers ledit ensemble élastiquement déformable (42).

6. Structure de véhicule automobile selon la revendication 5, **caractérisée en ce que** ledit ensemble élastiquement déformable (42) comporte une bague en élastomère (56) et une bague rigide (54) montée de manière concentrique à l'intérieur de ladite bague en élastomère, ladite bague rigide (54) présentant une ouverture tronconique (60) orientée vers ladite portion inférieure de structure (24).

7. Structure de véhicule automobile selon la revendication 5, **caractérisée en ce que** ledit ensemble élastiquement déformable (42) comporte un disque en élastomère (76) présentant un orifice central (78) et des fentes radiales (80) ménagées à partir dudit orifice central.

8. Structure de véhicule automobile selon la revendication 5, **caractérisée en ce que** ledit ensemble élastiquement déformable (42) comporte un corps en élastomère (88) présentant une pluralité de fentes (90) sensiblement parallèles espacées les unes des autres.

9. Batterie d'accumulateurs amovible (30) pour structure de véhicule automobile selon l'une quelconque des revendications 1 à 8, ladite batterie d'accumulateurs (30) présentant une partie inférieure de batterie (32) et une partie supérieure de batterie (34) surmontant ladite partie inférieure de batterie ; **caractérisée en ce qu'**elle comprend en outre un doigt de liaison (36) qui s'étend longitudinalement en saillie de ladite partie supérieure de batterie, ledit doigt de liaison (36) présentant une extrémité libre de contact (38) orientée à l'opposé de ladite partie inférieure de batterie.

## Patentansprüche

1. Struktur (20) für ein Kraftfahrzeug (10) mit Elektroantrieb, wobei die Struktur eine Aufnahme (22) zur Aufnahme einer herausnehmbaren Akkumulatorbatterie (30) für die Stromversorgung des Fahrzeugs umfasst, wobei die Struktur (20) einen unteren Strukturabschnitt (24) und einen oberen Strukturabschnitt (26) gegenüber dem unteren Strukturabschnitt aufweist, wobei die Akkumulatorbatterie (30) einen unteren Batterieteil (32) und einen oberen Batterieteil (34) über dem unteren Batterieteil aufweist, wobei die Struktur (20) Aufnahmeelemente (44), die sich in dem unteren Strukturabschnitt befinden, und Verbindungselemente (40), die sich in dem oberen Strukturabschnitt befinden, aufweist, wobei die Aufnahmeelemente (44) den unteren Batterieteil (32) aufnehmen können, während die Verbindungselemente (40) den oberen Batterieteil (34) mit dem oberen Strukturabschnitt (26) verbinden können, wenn die Akkumulatorbatterie (30) in das Innere der Aufnahme (22) eingesetzt wird, wobei die Akkumulatorbatterie im Inneren der Aufnahme bezüglich der Struktur oszillieren kann, und
wobei die Verbindungselemente (40) eine elastisch verformbare Anordnung (42) zum Dämpfen der Oszillationen des oberen Batterieteils (34) bezüglich des oberen Strukturabschnitts (26) umfassen,
**dadurch gekennzeichnet, dass** die Akkumulatorbatterie (30) einen Verbindungszapfen (36) umfasst, der sich in Längsrichtung von dem oberen Batterieteil (34) vorragend erstreckt, wobei der Verbindungszapfen (36) durch die elastisch verformbare Anordnung (42) in Eingriff genommen werden soll.

2. Kraftfahrzeugstruktur nach Anspruch 1, **dadurch gekennzeichnet, dass** die Aufnahme (22) durch den unteren Strukturabschnitt (24) nach außerhalb der Struktur (20) führt, wobei die Akkumulatorbatterie (30) durch den unteren Strukturteil (24) in die Aufnahme (22) eingesetzt werden kann.

3. Kraftfahrzeugstruktur nach Anspruch 1, **dadurch gekennzeichnet, dass** der Verbindungszapfen (36) ein freies Kontaktende (38) aufweist, das dem unteren Batterieteil (32) entgegengesetzt ausgerichtet ist.

4. Kraftfahrzeugstruktur nach Anspruch 1 oder 3, **dadurch gekennzeichnet, dass** der Verbindungszapfen (36) in seiner Längsrichtung translatorisch durch die elastisch verformbare Anordnung (42) getrieben werden soll, wenn die Akkumulatorbatterie (30) in das Innere der Aufnahme (22) eingesetzt ist.

5. Kraftfahrzeugstruktur nach einem der Ansprüche 1 bis 4, **dadurch gekennzeichnet, dass** es Selbstzentrierungsmittel zum Zentrieren der elastisch verformbaren Anordnung (42) um den Verbindungszapfen, wenn der Verbindungszapfen durch die elastisch verformbare Anordnung (42) getrieben wird, umfasst.

6. Kraftfahrzeugstruktur nach Anspruch 5, **dadurch gekennzeichnet, dass** die elastisch verformbare Anordnung (42) einen Elastomerring (56) und einen starren Ring (54), der konzentrisch in dem Elastomerring befestigt ist, umfasst, wobei der starre Ring (54) eine zum unteren Strukturabschnitt (24) ausgerichtete kegelstumpfförmige Öffnung (60) umfasst.

7. Kraftfahrzeugstruktur nach Anspruch 5, **dadurch gekennzeichnet, dass** die elastisch verformbare Anordnung (42) eine Elastomerscheibe (76) umfasst, die einen mittleren Durchlass (78) und radiale Schlitze (80), die von dem mittleren Durchlass ausgehen, aufweist.

8. Kraftfahrzeugstruktur nach Anspruch 5, **dadurch gekennzeichnet, dass** die elastisch verformbare Anordnung (42) einen Elastomerkörper (88) umfasst, der mehrere Schlitze (90) aufweist, die im Wesentlichen parallel voneinander beabstandet sind.

9. Herausnehmbare Akkumulatorbatterie (30) für eine Kraftfahrzeugstruktur nach einem der Ansprüche 1 bis 8, wobei die Akkumulatorbatterie (30) einen unteren Batterieteil (32) und einen oberen Batterieteil (34) über dem unteren Batterieteil aufweist, **dadurch gekennzeichnet, dass** sie des Weiteren einen Verbindungszapfen (36) umfasst, der sich in Längsrichtung von dem oberen Batterieteil vorragend erstreckt, wobei der Verbindungszapfen (36) ein freies Kontaktende (38) aufweist, das dem unteren Batterieteil entgegengesetzt ausgerichtet ist.

## Claims

1. Structure (20) of an electrically powered motor vehicle (10), said structure comprising a housing (22) designed to receive a removable accumulator battery (30) to supply electrical current to said vehicle, said structure (20) having a lower structural portion (24) and an upper structural portion (26) opposing said lower structural portion, said accumulator battery (30) having a lower battery part (32) and an upper battery part (34) above said lower battery part, said structure (20) having receiving members (44) located in said lower structural portion and connecting members (40) located in said upper structural portion, said receiving members (44) being capable of receiving said lower battery part (32) whilst said connecting members (40) are capable of connecting said upper battery part (34) to said upper structural portion (26) when said accumulator battery (30) is engaged inside said housing (22), said accumulator battery being capable of oscillating inside said housing relative to said structure, and said connecting members (40) comprising a resiliently deformable assembly (42) to dampen the oscillations of said upper battery part (34) relative to said upper structural portion (26), **characterized in that** said accumulator battery (30) comprises a connecting finger (36) which protrudes longitudinally from said upper battery part (34), said connecting finger (36) being designed to be engaged through said resiliently deformable assembly (42).

2. Motor vehicle structure according to Claim 1, **characterized in that** said housing (22) opens onto the outside of said structure (20) through said lower structural portion (24), said accumulator battery (30) being capable of being engaged inside said housing (22) through said lower structural portion (24).

3. Motor vehicle structure according to Claim 1, **characterized in that** said connecting finger (36) has a free contact end (38) oriented opposite said lower battery part (32).

4. Motor vehicle structure according to Claim 1 or 3, **characterized in that** said connecting finger (36) is designed to be driven in translation in its longitudinal direction through said resiliently deformable assembly (42) when said accumulator battery (30) is engaged inside said housing (22).

5. Motor vehicle structure according to any one of Claims 1 to 4, **characterized in that** it comprises self-centering means to center said resiliently deformable assembly (42) about said connecting finger (36) when said connecting finger is driven through said resiliently deformable assembly (42).

6. Motor vehicle structure according to Claim 5, **characterized in that** said resiliently deformable assembly (42) comprises an elastomeric ring (56) and a rigid ring (54) mounted concentrically inside said elastomeric ring, said rigid ring (54) having a frustoconical opening (60) oriented toward said lower structural portion (24).

7. Motor vehicle structure according to Claim 5, **characterized in that** said resiliently deformable assembly (42) comprises an elastomeric disk (76) having a central orifice (78) and radial slots (80) departing from said central orifice.

8. Motor vehicle structure according to Claim 5, **characterized in that** said resiliently deformable assembly (42) comprises an elastomeric body (88) having a plurality of substantially parallel slots (90) spaced apart from one another.

9. Removable accumulator battery (30) for a motor vehicle structure according to any one of Claims 1 to 8, said accumulator battery (30) having a lower battery part (32) and an upper battery part (34) above said lower battery part;
**characterized in that** it further comprises a connecting finger (36) which protrudes longitudinally from said upper battery part, said connecting finger (36) having a free contact end (38) oriented opposite said lower battery part.
